Europäisches Patentamt

European Patent Office

Office européen des brevets

(19)

(11) Publication number: **0 025 034**
**B1**

(12) **EUROPEAN PATENT SPECIFICATION**

(45) Date of publication of patent specification: **14.09.83**  (51) Int. Cl.³: **B 60 K   17/10**

(21) Application number: **79901242.2**

(22) Date of filing: **16.03.79**

(86) International application number:
**PCT/US79/00158**

(87) International publication number:
**WO 80/01894 18.09.80 Gazette 80/21**

(54) **VEHICLE COMPONENT INSTALLATION APPARATUS.**

| | |
|---|---|
| (43) Date of publication of application:<br>**18.03.81 Bulletin 81/11** | (73) Proprietor: **CATERPILLAR TRACTOR CO.**<br>**100 Northeast Adams Street**<br>**Peoria Illinois 61629 (US)** |
| (45) Publication of the grant of the patent:<br>**14.09.83 Bulletin 83/37** | (72) Inventor: **KUHFUSS Jr., Alvin L.**<br>**124 Lakewood**<br>**Morton, IL 61550 (US)**<br>Inventor: **RIEDIGER, Craig W.**<br>**No. 40 Northern Oaks, R.R. 1**<br>**Pekin, IL 61554 (US)** |
| (84) Designated Contracting States:<br>**FR GB** | |
| (56) References cited:<br>**CH - A - 276 888**<br>**DE - A - 2 614 060**<br>**DE - C - 738 008**<br>**FR - A - 922 107**<br>**FR - A - 922 222**<br>**FR - A - 2 260 474**<br>**FR - A - 2 421 749**<br>**GB - A - 2 005 207**<br>**US - A - 1 727 721**<br>**US - A - 2 613 754**<br>**US - A - 3 834 476** | (74) Representative: **Brunner, Michael John et al,**<br>**GILL JENNINGS & EVERY 53-64 Chancery Lane**<br>**London WC2A 1HN (GB)** |

Courier Press, Leamington Spa, England.

## Valve component installation apparatus

This invention relates to mounting apparatus for removably mounting a component on a vehicle and more particularly relates to the installation of a modular transmission package within a housing secured on a frame of the vehicle.

Modern-day construction vehicles are normally built on a modular concept whereby component parts thereof may be installed and removed for servicing purposes. For example, when a construction vehicle, such as a track-type tractor, is working at a remote job site, the transmission thereof may require in-the-field replacement or repair. Although the transmission package may be readily detached from within a support housing secured on a frame of the vehicle, as well as from an associated engine-driven shaft and drive axles, it has proved difficult to remove the transmission package from the vehicle due to interference with adjacent portions thereof.

In particular, the overall weight of the transmission package and the interference with adjacent structural components of the vehicle, such as overhanging portions of the vehicle's cab and fuel tank, render the installation and removal procedures difficult by use of conventional apparatus and methods.

However, large transmission packages not only exhibit substantially increased weight but are virtually inaccessible for the attachment of a pulley and cable system thereto. Furthermore, many such transmission packages must be tilted and/or moved laterally upon installation and removal thereof to adapt them for precise positioning in their support housings and for proper alignment with attendant drive mechanisms, such as the drive shaft and axles of the vehicle. It has been proposed, see US—A—2613754 to mount rollers on the transmission package for cooperation with longitudinal guides on the vehicle to ease installation and removal.

According to the present invention a vehicle having a support for a component removably mounted thereon; first guide means on the component for guiding the component upon movement in the direction of a longitudinal axis thereof, relative to the support, the first guide means including a roller; second guide means on the support for engaging the first guide means and for supporting the component to guide movement of the component between removed and installed positions thereof relative to the support; and fastening means for releasably securing the component to the support when the component is in its installed position, is characterised in that the first guide means includes a bar and means for slidably mounting the bar on the component for movement in the direction of the longitudinal axis, the roller being rotatably mounted on a forward end of the bar.

This invention thus provides apparatus for expeditiously and precisely installing and removing a vehicle component from a support thereof at a remote job site. The vehicle component, such as a transmission package, may be adapted for installation on and removal from vehicles wherein structural parts of the vehicle would normally interfere therewith. Furthermore, this invention is adapted for use with transmission packages and support housings therefore, having varied configurations requiring a tipping and/or lateral displacement of a particular transmission package upon installation and removal thereof from the housing.

Figures 1 and 2 are partially sectioned views illustrating an embodiment of the mounting apparatus for installing a transmission package in a housing;

Figure 3 is a sectional view, taken in the direction of arrows VII—VII in Figure 2;

Figure 4 is an enlarged sectional view, taken in the direction of arrows VIII—VIII in Figure 2; and

Figure 5 is an enlarged view, taken within circle IX in Figure 3.

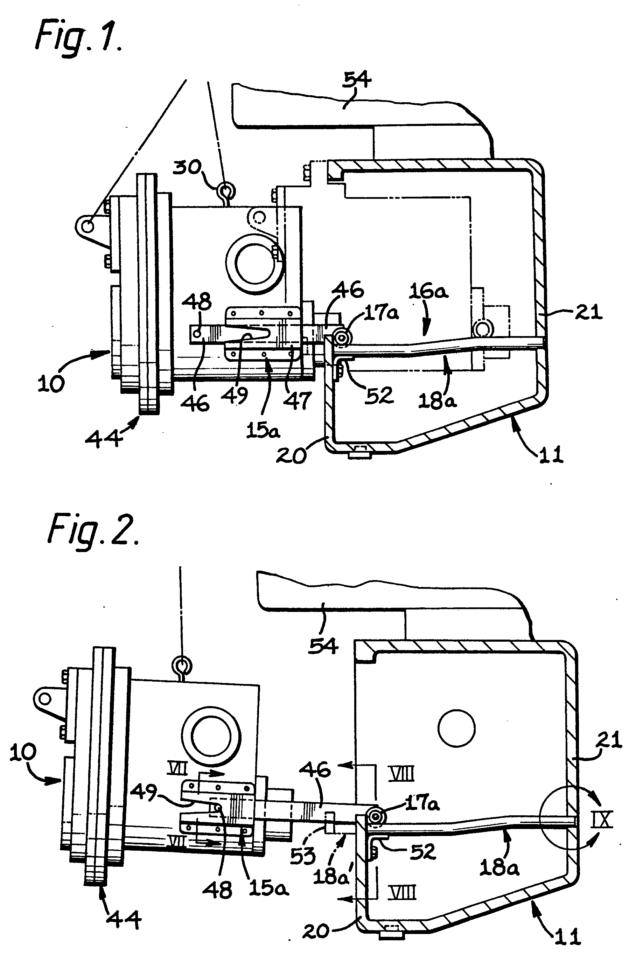

Figure 1 illustrates a vehicle component 10 such as a transmission package, adapted for installation on a support housing 11 secured on a frame of a construction vehicle, such as a track-type tractor.

The modular design of the above, briefly described power train components, including transmission package 10, facilitates expeditious assembly and servicing thereof. The ability to replace or repair transmission package 10 at a remote job site substantially reduces the downtime of the vehicle to thereby increase its availability and economic worth. To this end, a mounting apparatus embodying this invention includes first guide means 15a secured on transmission package to engage and be supported by second guide means 16a secured within housing 11. Guide means 15a and 16a cooperate to facilitate precise movement of transmission package 10 between its removed and installed positions.

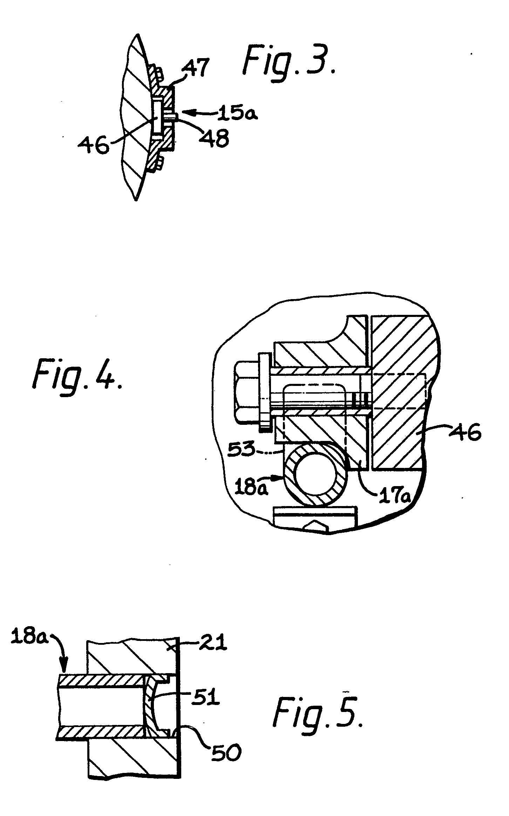

First guide means 15a comprises a bar 46 slidably mounted within a bracket 47, secured to each sdie of transmission package (Figure 3). A first end of each bar 46 has a roller 17a rotatably mounted thereon (Figure 4) whereas a second end of the bar has a pin 48 secured on the outer side thereof. Pin 48 functions as a stop means for engaging an end of a slot 49, defined in bracket 47, when bar 46 is extended fully rightwardly, as shown in Figure 2.

Second guide means 16a comprises a pair of laterally spaced rails 18a (one shown) secured within housing 11. As shown in Figure 5, a first end of each rail may be secured within a bore 50, formed through wall 21, along with an annular plug 51. The second end of each rail 18a may be suitably secured to wall 20 of housing 11, such as by a bracket 52. In certain transmission package applications, each rail 18a may be extended outwardly past housing 11 to receive a respective roller 17a, thereon, as indicated in Figure 2 by an extension 18a' of the rail. If so desired, a vertically disposed stop 52 may be secured to the end of rail extension 18a' as shown in Figures 2 and 4, to engage roller 17a. As shown by the sequence of views in Figures 1 and 2, transmission package 10 may be moved leftwardly away from housing 11, while yet maintaining rollers 17a in supporting contact with rails 18a.

Certain transmission package designs require that each rail 18 include a horizontally disposed rail portion adjacent to a rearward end of housing 11, and a vertically raised rail portion adjacent to a forward end of the housing. The gradual bend or ramp thus formed at intermediate rail portion facilitates insertion of transmission package 10 within housing 11 when an overhanging structure of the vehicle would prevent direct insertion of transmission package 10 within housing 11 and along its longitudinal axis, i.e. rightward movement of transmission package 10 in Figure 2 will initially engage roller 17 with the lower rail portion as shown, whereafter the roller will move upwardly on the intermediate rail portion and onto the raised rail portion. Alternatively, the sloping rail portion could be disposed vertically below the lower horizontal rail portion in those transmission applications wherein the structural interference occurs below the transmission.

Figure 1 further illustrates lifting means for lifting, supporting and moving transmission package 10 longitudinally and vertically during the installation or removal operation. The lifting means may comprise a pair of laterally spaced eye bolts 30, threadably attached to an upper side of transmission package 10 and preferably disposed in at least approximate vertical alignment with the centre of gravity (c.g.) thereof. The second lifting means comprises a flat plate releasably attached to the case of transmission package 10 by a plurality of releasable bolts. A pair of laterally spaced brackets are welded or otherwise suitably secured on one side of plate and each has a hole formed therethrough.

A standard cable and pulley system may be suitably attached to eye bolt and brackets as shown in Figure 1, to lift and move transmission package 10 into housing 11. The cable and pulley system may comprise a main cable having a hook thereof attached to first ends of secondary cable systems. The opposite ends of the secondary cable systems are releasably attached to eye bolts and brackets with cable system 39 perferably including a "Come-along" to selectively lengthen or shorten a cable thereof whereby transmission package 10 may be selectively tilted in a vertical plane, should the need arise. The primary cable is, of course, attached to a standard winch or hoist (not shown) to selectively raise or lower transmission package 10. Upon mounting of transmission package 10 within housing 11 to its installed position 10' in Figure 2, a plurality of fastening means or bolts may be inserted through suitable holes formed through a flange 44 of transmission package 10, and threadably secured within threaded holes formed in outer wall 20 of housing 11 (Figures 1 and 2).

Referring to Figures 1 to 5, first and second guide means 15a and 16a are particularly adapted for precisely guiding transmission package 10 within housing 11 upon installation or removal therefrom. Transmission package 10 is preferably of the modular type mounted rearwardly on the frame of a construction vehicle, such as a track-type tractor. However, it should be understood that other types of bulky and weighty vehicle components, such as engines, may also avail themselves of first and second guide means 15a and 16a of this invention to facilitate the expeditious and precise installation of the component on a vehicle.

In carrying forth the method steps for installing transmission package 10 within housing 11, cable and pulley system will be connected to eye bolts 30 and brackets as shown in Figure 1. The forward end of transmission package 10 is then moved into close proximity and into at least approximte alignment with respect to the rearward end of housing 11. As shown in Figure 2, rollers 17a of first guide means 15a mounted on the forward end of transmission package 10, are engaged in rolling contact with the rearward end of housing 11 at rails 18a of second guide means 16a.

Should the need arise, the "Come-along" may be actuated to either shorten or lengthen the cable to tilt transmission package 10 vertically to permit rollers 17a to engage rails 18a by avoiding any interfering overhangs or the like, such as posed by overhanging portions of a fuel tank. Cable and pulley system and transmission package 10 are then moved rightwardly by simultaneously sliding and guiding movement of rollers 15a on rails 18a to move the forward end of the transmission package towards a forward end of housing 11. Prior to full insertion of transmission package 10 into housing 11, eye bolts 30 would be removed with the forward end of transmission package 10 being fully supported on rails 20 and the rearward end of the transmission package being supported by cable and pulley system and the brackets.

Upon full insertion of transmission package 10 into housing 11 to its installed position 10' in Figure 2, the drive shaft and axles and the attendant drive mechanisms of the power train components may be suitably connected to transmission package 10. Thereafter, bolts might be tightened down to secure flange 44 of transmission package 10 to wall 20 of housing 11. Also, cable and pulley system may be detached from the brackets and the plate removed from transmission package 10 by releasing bolts.

Should the need arise to remove installed transmission package 10 from housing 11 for servicing or replacement purposes, the above procedure would be reversed. In particular, release of bolts will permit a reversal and securance of lifting means 29 to its position illustrated in Figures 1 and 2. Cable and pulley system may then be attached to the brackets to support the rearward end of transmission package 10. Upon disconnection of drive shaft and drive axles and attendant components of the power train bolts may be released to permit removal of transmission package 10 from housing 11. Upon partial removal of transmission package 10, as shown in Figure 2, eye bolts 30 may be resecured thereto for attachment to cable system 38 whereby the transmission package can be completely removed from housing 11.

The guide means 15a and 16a permit support of the forward end of transmission package 10 on housing 11 while the transmission package is maintained at a substantial distance from the housing to clear interfering structures of the vehicle. In particualr, support bars 46 may be extended from transmission package 10 to engage rollers 17a thereof with rails 18a. As shown in Figure 1, this arrangement facilitates vertical raising of transmission package 10 and clearing of an overhanging portion 54 of the vehicle's fuel tank, for example, upon removal of the transmission package. Rail extensions 18a' may be utilized to further extend the support distance between the transmission package and the housing.

## Claims

1. A vehicle having a support (11) for a component (10) removably mounted thereon; first guide means (15a) on the component (10) for guiding the component (10) upon movement in the direction of a longitudinal axis thereof, relative to the support (11), the first guide means (15a) including a roller (17a); second guide means (16a) on the support (11) for engaging the first guide means (15a) and for supporting the component (10) to guide movement of the component (10) between removed and installed positions thereof relative to the support (11); and fastening means (42) for releasably securing the component (10) to the support (11) when the component (10) is in its installed position, characterized in that the first guide means (15a) includes a bar (46) and means (47) for slidably mounting the bar (46) on the component (10) for movement in the direction of the longitudinal axis, the roller (17a) being rotatably mounted on a forward end of the bar (46).

2. A vehicle according to claim 1, wherein the mounting means (47) includes a bracket (47) secured on a side of the component (10), the bar (46) being slidably mounted in the bracket (47).

3. A vehicle according to claim 1 or claim 2, further including stop means (48) secured on a rearward end of the bar (46) for engaging the mounting means (47) to limit forward extension of the bar (46) relative to the component (10).

4. A vehicle according to any of claims 1 to 3, wherein the second guide means (16a) includes a rail (18a) secured on the support (11) and disposed substantially parallel to the longitudinal axis.

5. A vehicle according to claim 4, wherein a rearward end of the rail (18a) terminates at a rearward end of the support (11).

6. A vehicle according to claim 4, wherein the rail (18a) includes an extension (18a') extending past a rearward end of the support (11).

7. A vehicle according to claim 4, wherein the rail (18a) includes a first rail portion which is substantially parallel to the longitudinal axis of the component (10), adjacent to a rearward end of the support (11), and a second rail portion which is displaced vertically relative the first rail portion (22).

8. A vehicle according to claim 4 wherein said rail (18a) includes a first rail portion disposed adjacent to a rearward end of the support (11) and a second rail portion disposed adjacent to a forward end of support (11), the second rail portion being displaced laterally relative to the first rail portion (22).

9. A vehicle according to any of claims 1 to 8, wherein the support (11) includes a housing (11) and the component (10) includes a transmission.

## Patentänspruche

1. Fahrzeug mit einem Träger (11) für eine entfernbar darauf angeordnete Komponente (10), erste Führungsmittel (15a) auf der Komponente (10) zur Führung der Komponente (10) bei Bewegung in der Richtung einer Längsachse derselben bezüglich des Trägers (11), wobei die ersten Führungsmittel (15a) eine Rolle (17a) aufweisen, zweite Führungsmittel (16a) auf dem Träger (11) zum Eingriff mit den ersten Führungsmittel (15a) und zur Halterung der Komponente (10), um die Bewegung der Komponente (10) zwischen entfernten und eingebauten Positionen derselben bezüglich des Trägers (11) zu führen, und Befestigungsmittel (42) zur lösbaren Befestigung der Komponente (10) am Träger (11), wenn sich die Komponente (10) in ihrer eingebauten Position befindet, dadurch gekennzeichnet, daß die ersten Führungsmittel (15a) eine Stange (46) und Mittel (47) aufweisen, um die Stange (46) gleitend an der Komponente (10) zur Bewegung in Richtung der Längsachse anzuordnen, und wobei die Rolle (17a) drehbar an einem vorderen Ende der Stange (46) gelagert ist.

2. Fahrzeug nach Anspruch 1, wobei die Befestigungsmittel (47) einen Bügel (47) aufweisen, und zwar befestigt an einer Seite der Komponente (10), und wobei die Stange (46) gleitend im Bügel (47) angeordnet ist.

3. Fahrzeug nach Anspruch 1 oder 2, wobei ferner Anschlagmittel (48) an einem hinteren Ende der Stange (46) zum Eingriff mit den Befestigungsmitteln (47) befestigt sind, um die Vorwärtserstreckung der Stange (46) bezüglich der Komponente (10) zu beschränken.

4. Fahrzeug nach einem Ansprüche 1—3, wobei die zweiten Führungsmittel (16a) eine Schiene (18a) aufweisen, und zwar befestigt am Träger (11) und im wesentlichen parallel zur Längsachse angeordnet.

5. Fahrzeug nach Anspruch 4, wobei ein hinteres Ende der Schiene (18a) in einem hinteren Ende des Trägers (11) endet.

6. Fahrzeug nach Anspruch 4, wobei dei Schiene (18a) einen Vorsprung (18a') aufweist, der sich über ein hinteres Ende des Trägers (11) hinaus erstreckt.

7. Fahrzeug nach Anspruch 4, wobei die Schiene (18a) einen ersten Schienenteil aufweist, der im wesentlichen parallel zur Längsachse der Komponente (10) verläuft, benachbart zu einem hinteren Ende des Trägers (11), und wobei ferner ein zweiter Schienenteil vorgesehen ist, der vertikal bezüglich des ersten Schienenteils (22) versetzt ist.

8. Fahrzeug nach Anspruch 4, wobei die Schiene (18a) einen ersten Schienenteil aufweist, und zwar angeordnet benachbart zu einem hinteren Ende des Trägers (11) und mit einem zweiten Schienenteil, angeordent benachbart zu einem hinteren Ende des Trägers (11) und mit einem zweiten Schienenteil angeordnet benachbart zu einem vorderen Ende des Trägers (11), und wobei der zweite Schienenteil seitlich bezüglich des ersten Schienenteils (22) versetzt ist.

9. Fahrzeug nach einem der Ansprüche 1—8, wobei der Träger (11) ein Gehäuse (11) umfaßt und wobei die Komponente (10) ein Getriebe umfaßt.

**Revendications**

1. Véhicule ayant un support (11) pour un composant (10) monté de manière amovible sur lui; un premier moyen de guidage (15a) sur le composant (10) pour guider le composant (10) lors d'un mouvement dans la direction de son axe longitudinal, par rapport au support (11), le premier moyen de guidage (15a) comprenant un galet (17a); un second moyen de guidage (16a) sur le support (11) pour engager le premier moyen de guidage (15a) et supporter le composant (10) pour guider le mouvement du composant (10) entre les positions enlevée et installée par rapport au support (11); et un moyen de fixation (42) pour maintenir de façon amovible le composant (10) sur le support (11) quand le composant (10) est à sa position installée, caractérisé en ce que le premier moyen de guidage (15a) comprend une barre (46) et un moyen (47) pour monter la barre (46) de manière coulissante sur le composant (10) pour un mouvement dans la direction de l'axe longitudinal, le galet (17a) étant monté rotatif sur une extrémité avant de la barre (46).

2. Véhicule selon la revendication 1, dans lequel le moyen de montage (47) comprend un support (47) fixé d'un côté du composant (10), la barre (46) étant montée coulissante dans le support (47).

3. Véhicule selon la revendication 1 ou la revendication 2, comprenant en outre un moyen d'arrêt (48) fixé à une extrémité arrière de la barre (46) pour s'engager avec le moyen de montage (47) afin de limiter une extension de la barre (46) vers l'avant par rapport au composant (10).

4. Véhicule selon l'une quelconque des revendications 1 à 3, dans lequel le second moyen de guidage (16a) comprend un rail (18a) fixé sur le support (11) et disposé sensiblement parallèlement à l'axe longitudinal.

5. Véhicule selon la revendication 4, dans lequel une extrémité arrière du rail (18a) se termine à une extrémité arrière de support (11).

6. Véhicule selon la revendication 4, dans lequel le rail (18a) comprend une extension (18a') qui s'étend au-delà d'une extrémité arrière du support (11).

7. Véhicule selon la revendication 4, dans lequel le rail (18a) comprend une première partie qui est sensiblement parallèle à l'axe longitudinal du composant (10), à proximité d'une extrémité arrière du support (11), et une seconde partie qui est décalée verticalement par rapport à la première partie (22).

8. Véhicule selon la revendication 8, dans lequel ledit rail (18a) comprend une première partie qui est disposée à proximité d'une extrémité arrière du support (11) et une seconde partie qui est disposée à proximité d'une extrémité avant du support (11), la seconde partie du rail étant décalée latéralement par rapport à la première partie du rail (22).

9. Véhicule selon l'une quelconque des revendications 1 à 8, dans lequel le support (11) comprend un logement (11) et le composant (10) comprend une transmission.

Fig.1.

Fig.2.

Fig. 3.

47

46

15a

48

Fig. 4.

53

18a

17a

46

18a

21

51

50

Fig. 5.